# EUROPEAN PATENT APPLICATION

(11) **EP 4 668 361 A1**
(43) Date of publication of application: **24.12.2025**
(21) Application number: 24788990.0
(22) Date of filing: 09.04.2024
(51) Int. Cl.: H01M 4/525, H01M 4/36, H01M 4/505, H01M 4/131, H01M 10/052, C01G 53/00, H01M 4/02

(54) **CATHODE ACTIVE MATERIAL, PREPARATION METHOD THEREFOR, AND CATHODE AND LITHIUM SECONDARY BATTERY WHICH COMPRISE SAME**

(30) Priority: 10.04.2023 KR 20230047005
(71) Applicant: LG CHEM, LTD., Seoul 07336 (KR)
(72) Inventor: JEONG, Jin Hoo, Daejeon 34122 (KR); JEONG, Myung Gi, Daejeon 34122 (KR); JU, Jin Wook, Daejeon 34122 (KR); WOO, Sang Won, Daejeon 34122 (KR); HWANG, Joo Kyoung, Daejeon 34122 (KR); JUNG, Jin Hee, Daejeon 34122 (KR); GU, Ye Hyeon, Daejeon 34122 (KR)
(74) Representative: Hoffmann Eitle
(86) International application number: PCT/KR2024/004699
(87) International publication number: WO 2024/215048

(57) **Abstract**

The present invention relates to a cathode active material, a preparation method therefor, and a cathode and a lithium secondary battery which comprise same, the cathode active material having a discrete particle form and comprising a lithium composite transition metal oxide in a discrete particle form with an average particle diameter (D₅₀) of greater than 5.5 µm and 10.0 µm or less, wherein the lithium composite transition metal oxide comprises Al, Y and Zr.

## Description

### TECHNICAL FIELD

### Cross-reference to Related Applications

This application claims priority from Korean Patent Application No. 10-2023-0047005, filed on April 10, 2023, the disclosure of which is incorporated by reference herein.

### Technical Field

The present invention relates to a positive electrode active material including a lithium composite transition metal oxide in a form of a single particle, a preparation method thereof, and a positive electrode and a lithium secondary battery which include the positive electrode active material.

### BACKGROUND ART

Recently, in order to solve structural and thermal stability problems of a positive electrode material in a form of a secondary particle itself, development of a positive electrode material in a form of a single particle is accelerating.

Specifically, since the positive electrode material in the form of a secondary particle has a large area in contact with an electrolyte solution when used in a lithium secondary battery, there is a problem in that a volume of the battery expands because a lot of gas is generated, and, in a case in which an amount of nickel in the positive electrode material is increased for high capacity, there is a problem in that risk of fire is also increased. Accordingly, demand for the development of the positive electrode material in the form of a single particle is increasing.

With respect to the positive electrode material in the form of a single particle, the structural and thermal stability problems have been improved in comparison to the positive electrode material in the form of a secondary particle, but stability is still a problem in the case that the amount of the nickel in the positive electrode material is increased for high capacity.

Thus, there is a need to develop a positive electrode material in the form of a single particle which may improve capacity retention and thermal stability of a battery when used in the battery while having excellent stability.

### DISCLOSURE OF THE INVENTION

### TECHNICAL PROBLEM

An aspect of the present invention provides a positive electrode active material including a lithium composite transition metal oxide in a form of a single particle which may improve capacity retention and thermal stability of a battery when used in the battery while having excellent structural stability.

Another aspect of the present invention provides a preparation method for preparing the positive electrode active material.

Another aspect of the present invention provides a lithium secondary battery in which capacity retention and thermal stability are improved by including the positive electrode active material.

### TECHNICAL SOLUTION

In order to solve the above-described tasks, the present invention provides a positive electrode active material, a method of preparing a positive electrode active material, a positive electrode, and a lithium secondary battery.
(1) The present invention provides a positive electrode active material including a lithium composite transition metal oxide in a form of a single particle having an average particle diameter (D₅₀) of greater than 5.5 µm and equal to or less than 10.0 µm, wherein the lithium composite transition metal oxide includes aluminum (Al), yttrium (Y), and zirconium (Zr).
(2) The present invention provides the positive electrode active material of (1) above, wherein the Al is included in an amount of 500 ppm to 3,000 ppm based on a total weight of the lithium composite transition metal oxide.
(3) The present invention provides the positive electrode active material of (1) or (2) above, wherein the Y is included in an amount of 100 ppm to 2,000 ppm based on a total weight of the lithium composite transition metal oxide.
(4) The present invention provides the positive electrode active material of any one of (1) to (3) above, wherein the Zr is included in an amount of 500 ppm to 5,000 ppm based on a total weight of the lithium composite transition metal oxide.
(5) The present invention provides the positive electrode active material of any one of (1) to (4) above, wherein the lithium composite transition metal oxide includes 60 mol% or more of nickel based on the total number of moles of metals excluding lithium.
(6) The present invention provides the positive electrode active material of any one of (1) to (5) above, wherein the lithium composite transition metal oxide has a composition represented by Formula 1.

   [Formula 1] Liₓ[NiₐCo_{b}Mn_{c}Al_{d}YₑZr_{f}M1_{g}]O_{2-y}A_{y}

   In Formula 1,
   M1 is at least one selected from boron (B), titanium (Ti), tungsten (W), niobium (Nb), strontium (Sr), molybdenum (Mo), magnesium (Mg), phosphorus (P), vanadium (V), tantalum (Ta), gallium (Ga), and calcium (Ca),
   A is at least one selected from fluorine (F), chlorine (Cl), bromine (Br), iodine (I), and sulfur (S), and
   0.9≤x≤1.2, 0.6≤a<1.0, 0≤b≤0.4, 0≤c≤0.4, 0<d≤0.01, 0<e≤0.0006, 0<f≤0.005, 0≤g≤0.2, a+b+c+d+e+f+g=1, and 0≤y≤0.2.
(7) The present invention provides the positive electrode active material of any one of (1) to (6) above, wherein the positive electrode active material further includes a coating portion containing cobalt (Co) which is formed on the lithium composite transition metal oxide in the form of a single particle.
(8) The present invention provides the positive electrode active material of (7) above, wherein the coating portion further includes Al, Zr, or a combination thereof.
(9) The present invention provides a method of preparing the positive electrode active material which includes steps of: (A) preparing a mixture by mixing a positive electrode active material precursor, which is a composite transition metal hydroxide, a composite transition metal oxyhydroxide, or a combination thereof, a first lithium-containing raw material, an aluminum-containing raw material, a yttrium-containing raw material, and a zirconium-containing raw material; (B) preparing a primary sintered product by performing primary sintering on the mixture at a temperature of 820°C to 950°C; and (C) preparing a secondary sintered product by optionally mixing a second lithium-containing raw material with the primary sintered product and performing secondary sintering at a temperature of 700°C to 850°C.
(10) The present invention provides the method of (9) above, wherein the method further includes a step of (B') grinding the primary sintered product, before step (C).
(11) The present invention provides the method of (9) or (10) above, wherein the method further includes a step of (C') grinding the secondary sintered product.
(12) The present invention provides the method of any one of (9) to (11) above, wherein the method further includes a step of (D) mixing the secondary sintered product and a cobalt-containing coating material and performing a heat treatment.
(13) The present invention provides the method of (12) above, wherein, when mixing the secondary sintered product and the cobalt-containing coating material in step (D), an aluminum-containing coating material, a zirconium-containing coating material, or a combination thereof is further mixed.
(14) The present invention provides the method of (12) or (13) above, wherein the cobalt-containing coating material is mixed in an amount such that a ratio (B/A) of the number of moles (B) of cobalt contained in the cobalt-containing coating material to the total number of moles (A) of metals excluding lithium, which are included in the secondary sintered product, is in a range of 0.01 to 0.03.
(15) The present invention provides the method of (13) above, wherein the aluminum-containing coating material is mixed in an amount of 0.03 part by weight to 0.10 part by weight based on 100 parts by weight of the secondary sintered product.
(16) The present invention provides the method of any one of (12) to (15) above, wherein the heat treatment is performed in an oxygen atmosphere.
(17) The present invention provides the method of any one of (12) to (16) above, wherein the heat treatment is performed at a temperature of 600°C to 800°C.
(18) The present invention provides a positive electrode including the positive electrode active material of any one of (1) to (8) above.
(19) The present invention provides a lithium secondary battery including the positive electrode of (18) above; a negative electrode; a separator disposed between the positive electrode and the negative electrode; and an electrolyte.

### ADVANTAGEOUS EFFECTS

Since a positive electrode active material of the present invention includes a lithium composite transition metal oxide in a form of a single particle having an average particle diameter (D₅₀) of greater than 5.5 µm and equal to or less than 10.0 µm and the lithium composite transition metal oxide includes aluminum (Al), yttrium (Y), and zirconium (Zr), it may improve capacity characteristics and life characteristics of a lithium secondary battery.

Also, according to a method of preparing a positive electrode active material of the present invention, the above-described positive electrode active material may be effectively prepared.

### BRIEF DESCRIPTION OF THE DRAWING

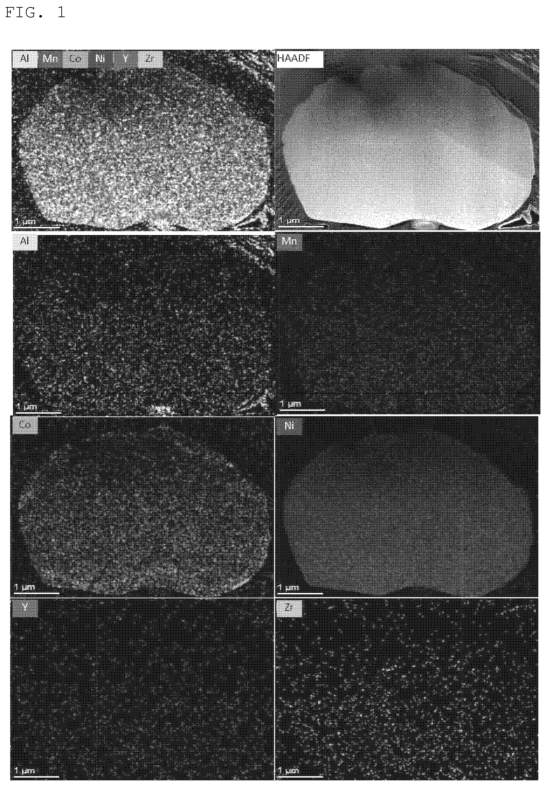

FIG. 1 is transmission electron microscope (TEM)-energy dispersive X-ray spectroscopy (EDX)-Mapping data of a positive electrode active material of Example 1.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms 'include,' 'comprise,' or 'have' in this specification specify the presence of stated features, numbers, steps, elements, or combinations thereof, but do not preclude the presence or addition of one or more other features, numbers, steps, elements, or combinations thereof.

The term 'on' in the present specification means not only a case in which one component is formed directly on an upper surface of another component, but also includes a case in which intervening components may also be present.

In the present specification, the expression 'positive electrode active material in a form of a single particle' is a concept in contrast to a positive electrode active material in a form of a spherical secondary particle formed by aggregation of tens to hundreds of primary particles which is prepared by a conventional method, wherein it means a positive electrode active material composed of 10 or less primary particles. Specifically, in the present invention, the positive electrode active material in the form of a single particle may be a single particle composed of one primary particle, or may be in the form of a secondary particle in which several primary particles are aggregated.

The expression 'primary particle' denotes the smallest unit of particles recognized when a positive electrode active material is observed through a scanning electron microscope, and the expression 'secondary particle' denotes a secondary structure formed by aggregation of a plurality of the primary particles.

In the present specification, the expression 'average particle diameter (D₅₀)' denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Microtrac S3500), a particle size distribution is calculated by measuring a difference in diffraction patterns due to a particle size when particles pass through a laser beam, and the D₅₀ may be measured by calculating a particle diameter at 50% of the cumulative distribution of volume according to the particle diameter using the measurement instrument.

### Positive Electrode Active Material

The present invention provides a positive electrode active material including a lithium composite transition metal oxide in a form of a single particle having an average particle diameter (D₅₀) of greater than 5.5 µm and equal to or less than 10.0 µm, wherein the lithium composite transition metal oxide includes aluminum (Al), yttrium (Y), and zirconium (Zr). The lithium composite transition metal oxide may have a layered structure.

The present inventors have found that, in a case in which the positive electrode active material includes a lithium composite transition metal oxide in a form of a single particle having an average particle diameter (D₅₀) of greater than 5.5 µm and equal to or less than 10.0 µm and the lithium composite transition metal oxide includes Al, Y, and Zr, it may improve capacity characteristics and life characteristics of a lithium secondary battery because structural stability of the positive electrode active material is increased, cation mixing is reduced, and a grain size is as large as 3.5 µm to 7.0 µm, thereby leading to the completion of the present invention. Specifically, the present inventors included Zr and Al as dopants for the structural stability of the positive electrode active material in the form of a single particle having a large average particle diameter, and there was a problem in which the grain size was not increased when the Al was included as the dopant, wherein the present invention was completed by simultaneously including Y to solve the problem.

According to the present invention, the lithium composite transition metal oxide in the form of a single particle has an average particle diameter (D₅₀) of greater than 5.5 µm and equal to or less than 10.0 µm. The average particle diameter (D₅₀) of the lithium composite transition metal oxide in the form of a single particle may specifically be greater than 5.5 µm, 6.0 µm, 6.5 µm or more, 7.0 µm, 7.5 µm, 8.0 µm, 8.5 µm, 9.0 µm, 9.5 µm, or 10.0 µm or less. In a case in which the average particle diameter (D₅₀) of the lithium composite transition metal oxide is within the above range, since a specific surface area is decreased to reduce contact with an electrolyte solution, a battery including the positive electrode active material according to the present invention is advantageous in that a capacity retention is high, a gas generation amount is reduced, and thermal stability is excellent.

In a case in which the average particle diameter (D₅₀) of the lithium composite transition metal oxide is 5.5 µm or less, since the specific surface area is increased due to the small particle diameter, there is a problem in that the capacity retention and thermal stability of the battery are poor, and, in a case in which the average particle diameter (D₅₀) is greater than 10.0 µm, since a movement distance of lithium in the particle is increased, there is a problem in that resistance is increased and charge capacity is also reduced.

According to the present invention, the Al may be included in an amount of 500 ppm to 3,000 ppm based on a total weight of the lithium composite transition metal oxide. In this case, since an internal crystal structure of the positive electrode active material is stabilized, capacity characteristics and resistance characteristics of the battery may be improved.

According to the present invention, the Y may be included in an amount of 100 ppm to 2,000 ppm based on the total weight of the lithium composite transition metal oxide. In this case, since a size of grains included in one particle satisfies a range of 3.5 µm to 7.0 µm, the capacity characteristics and resistance characteristics of the battery may be improved.

According to the present invention, the Zr may be included in an amount of 500 ppm to 5,000 ppm based on the total weight of the lithium composite transition metal oxide. In this case, since the Zr is stably doped in a lithium layer to improve the structural stability during intercalation and deintercalation of lithium, the life characteristics and resistance characteristics of the battery may be improved.

According to the present invention, the lithium composite transition metal oxide may include 60 mol% or more, specifically 80 mol% or more, and more specifically 85 mol% or more of nickel based on the total number of moles of metals excluding lithium. That is, the lithium composite transition metal oxide may be a high-nickel (high Ni)-based lithium composite transition metal oxide. In this case, energy density of the lithium secondary battery may be improved.

According to the present invention, the lithium composite transition metal oxide may have a composition represented by the following Formula 1. In this case, the lithium composite transition metal oxide has a layered structure.

[Formula 1] Liₓ[NiₐCo_{b}Mn_{c}Al_{d}YₑZr_{f}M1_{g}]O_{2-y}A_{y}

In Formula 1,
M1 is at least one selected from boron (B), titanium (Ti), tungsten (W), niobium (Nb), strontium (Sr), molybdenum (Mo), magnesium (Mg), phosphorus (P), vanadium (V), tantalum (Ta), gallium (Ga), and calcium (Ca),
A is at least one selected from fluorine (F), chlorine (Cl), bromine (Br), iodine (I), and sulfur (S), and
0.9≤x≤1.2, 0.6≤a<1.0, 0≤b≤0.4, 0≤c≤0.4, 0<d≤0.01, 0<e≤0.0006, 0<f≤0.005, 0≤g≤0.2, a+b+c+d+e+f+g=1, and 0≤y≤0.2.

a represents an atomic fraction of nickel among metallic elements in the lithium composite transition metal oxide, wherein a may satisfy 0.6≤a<1, 0.8≤a≤0.98, or 0.85≤a≤0.95.

b represents an atomic fraction of cobalt among the metallic elements in the lithium composite transition metal oxide, wherein b may satisfy 0≤b≤0.4, 0.01≤b≤0.2, or 0.01≤b≤0.15.

c represents an atomic fraction of manganese among the metallic elements in the lithium composite transition metal oxide, wherein c may satisfy 0≤c≤0.4, 0.01≤c≤0.2, or 0.01≤c≤0.15.

d represents an atomic fraction of aluminum among the metallic elements in the lithium composite transition metal oxide, wherein d may satisfy 0<d≤0.01, 0.002≤d≤0.008, or 0.003≤d≤0.006.

e represents an atomic fraction of yttrium among the metallic elements in the lithium composite transition metal oxide, wherein e may satisfy 0<e≤0.0006, 0.0001≤e≤0.0005, or 0.0002≤e≤0.0003.

f represents an atomic fraction of zirconium among the metallic elements in the lithium composite transition metal oxide, wherein f may satisfy 0<f≤0.005, 0.001≤f≤0.003, or 0.001≤f≤0.002.

g represents an atomic fraction of a M1 element among the metallic elements in the lithium composite transition metal oxide, wherein g may satisfy 0≤g≤0.2, 0≤g≤0.1, or 0≤g≤0.05.

According to the present invention, the positive electrode active material may further include a coating portion containing cobalt (Co) which is formed on the lithium composite transition metal oxide in the form of a single particle. The coating portion may further include Al, Zr, or a combination thereof. In a case in which the positive electrode active material further includes the coating portion, an amount of residual lithium by-product may be reduced, the structural stability may be increased to improve the life characteristics and resistance characteristics of the battery, and the gas generation amount may also be reduced. In this case, the coating portion may have a form of a thin film, and may be formed entirely or locally on the lithium composite transition metal oxide.

The Co present in the coating portion may be included in an amount of 0.5 mol% to 3 mol% based on the total number of moles of metals excluding lithium. In this case, the residual lithium by-product may be further reduced, and the life and resistance characteristics may be further improved.

The Al present in the coating portion may be included in an amount of 300 ppm to 10,000 ppm based on the total weight of the lithium composite transition metal oxide. In this case, since the structural stability is further increased, the life characteristics or resistance characteristics may be further improved.

### Method of Preparing Positive Electrode Active Material

The present invention provides a method of preparing the above-described positive electrode active material. That is, the positive electrode active material according to the present invention is prepared by a method of preparing a positive electrode active material below.

The method of preparing a positive electrode active material according to the present invention includes steps of: (A) preparing a mixture by mixing a positive electrode active material precursor, which is a composite transition metal hydroxide, a composite transition metal oxyhydroxide, or a combination thereof, a first lithium-containing raw material, an aluminum-containing raw material, a yttrium-containing raw material, and a zirconium-containing raw material; (B) preparing a primary sintered product by performing primary sintering on the mixture at a temperature of 820°C to 950°C; and (C) preparing a secondary sintered product by optionally mixing a second lithium-containing raw material with the primary sintered product and performing secondary sintering at a temperature of 700°C to 850°C.

The aluminum-containing raw material may be at least one selected from Al(OH)₃, Al₂O₃, AlCl₃, Al(NO)₃, AlSO₄, and Al₂S₃, may specifically be at least one selected from Al(OH)₃, Al₂O₃, and Al(NO)₃, and may more specifically be Al(OH)₃. The aluminum-containing raw material may be added in an amount of 500 ppm to 3,000 ppm based on a total weight of the positive electrode active material precursor.

The yttrium-containing raw material may be at least one selected from YCl₃, Y₂O₃, Y(NO₃)₃, Y(OH)₃, YSZ, Y₂(SO₄)₃, and Y₂S₃, may specifically be at least one selected from Y₂O₃ and Y(OH)₃, and may more specifically be Y₂O₃. The yttrium-containing raw material may be added in an amount of 100 ppm to 2,000 ppm based on the total weight of the positive electrode active material precursor.

The zirconium-containing raw material may be at least one selected from Zr(OH)₄, ZrO₂, Zr(NO₃)₄, ZrCl₄, ZrS₂, Zr(SO₄)₂, and C₈H₁₂O₈Zr, may specifically be at least one selected from Zr(OH)₄ and ZrO₂, and may more specifically be ZrO₂. The zirconium-containing raw material may be added in an amount of 500 ppm to 5,000 ppm based on the total weight of the positive electrode active material precursor.

If the mixture is primarily sintered at a temperature of 820°C to 950°C, a primary sintered product in a form of a single particle is prepared while primary particles of the positive electrode active material precursor are aggregated.

In a case in which the primary sintering temperature is within the above range, a structurally stable primary sintered product in the form of a single particle is prepared while the primary particles of the positive electrode active material precursor are aggregated, in a case in which the primary sintering temperature is less than 820°C, there is a problem in that the primary particles are not sufficiently aggregated, and, in a case in which the primary sintering temperature is greater than 950°C, there is a problem in that a structurally unstable sintered product with a low degree of crystallinity is prepared.

According to the present invention, the primary sintering may be performed in an oxygen atmosphere, in terms of preventing degradation of the lithium transition metal oxide into a rock salt structure.

According to the present invention, the primary sintering may be performed for 3 hours to 15 hours, specifically 6 hours to 12 hours, and more specifically 9 hours to 12 hours, in terms of aggregating the primary particles and improving crystallinity of the primary sintered product.

If the primary sintered product is secondarily sintered at a temperature of 700°C to 850°C, a secondary sintered product is prepared while lithium is intercalated into the primary sintered product. In this case, the secondary sintered product is a lithium composite transition metal oxide in the form of a single particle.

In a case in which the secondary sintering temperature is within the above range, there is an advantage in that the layered structure is restored while lithium is intercalated into the rock salt structure which may be formed on a surface of the primary sintered product due to the high temperature during the primary sintering and the lithium by-product is reduced. In a case in which the secondary sintering temperature is less than 700°C, there is a problem in that a lithium intercalation rate is low due to the low temperature, and, in a case in which the secondary sintering temperature is greater than 850°C, there is a problem in that the surface of the primary sintered product degrades into the rock salt structure due to the high temperature and the lithium by-product remains.

According to the present invention, the secondary sintering may be performed in an oxygen atmosphere, in terms of preventing the degradation of the lithium transition metal oxide into the rock salt structure.

According to the present invention, the secondary sintering may be performed for 3 hours to 15 hours, specifically 6 hours to 12 hours, and more specifically 9 hours to 12 hours, in terms of increasing a degree of crystallinity of the internal crystal structure of the positive electrode active material.

The method of preparing a positive electrode active material according to the present invention may further include a step of (B') grinding the primary sintered product, before step (C). The step (B') may grind the primary sintered product such that an average particle diameter (D₅₀) is greater than 5.5 µm and equal to or less than 10.0 µm.

The method of preparing a positive electrode active material according to the present invention may further include a step of (C') grinding the secondary sintered product. The step (C') may grind the primary sintered product such that an average particle diameter (D₅₀) is greater than 5.5 µm and equal to or less than 10.0 µm.

The grinding of step (B') and step (C') may be performed using a pin mill, an air classifying mill (ACM), or a jet mill. With respect to the pin mill, milling may be performed at 18,000 rpm, with respect to the ACM, classification may be performed at 6,000 rpm and main milling may be performed at 12,000 rpm using equipment by Hosokawa Micron Corporation, and, with respect to the jet mill, classification may be performed at 3,500 rpm and milling may be performed at a pressure of 6 bars using equipment by ZM solution.

The positive electrode active material according to the present invention may be prepared by a process of adding the lithium-containing raw material in two portions, or may be prepared by a process of adding the lithium-containing raw material at once. That is, the lithium-containing raw material may all be added before the primary sintering, or may be dividedly added before the primary sintering and before the secondary sintering.

In a case in which the lithium-containing raw material is added in two portions, the positive electrode active material according to the present invention, for example, may be prepared by performing primary sintering on the mixture prepared in step (A) at a temperature of 820°C to 950°C to obtain a primary sintered product, grinding the primary sintered product at room temperature such that an average particle diameter (D₅₀) is greater than 5.5 µm and equal to or less than 10.0 µm, then mixing a second lithium-containing raw material with the ground primary sintered product and performing secondary sintering at a temperature of 700°C to 850°C to obtain a secondary sintered product, and grinding the secondary sintered product at room temperature such that an average particle diameter (D₅₀) is greater than 5.5 µm and equal to or less than 10.0 µm. In this case, in step (A), the first lithium-containing raw material may be mixed such that a ratio (M:Li) of the total number of moles (M) of transition metals included in the positive electrode active material precursor to the number of moles (Li) of lithium included in the first lithium-containing raw material is in a range of 1:0.95 to 1:1.02, and, in step (C), the second lithium-containing raw material may be mixed such that a ratio (M:Li) of the total number of moles (M) of the transition metals included in the positive electrode active material precursor of step (A) to the number of moles (Li) of lithium included in the second lithium-containing raw material is in a range of 1:0.01 to 1:1.10.

In a case in which the lithium-containing raw material is added at once, the positive electrode active material according to the present invention, for example, may be prepared by performing primary sintering on the mixture prepared in step (A) at a temperature of 820°C to 950°C and then immediately decreasing the temperature to 700°C to 850°C (do not decrease the temperature to room temperature), performing secondary sintering at a temperature of 700°C to 850°C to obtain a secondary sintered product, and grinding the secondary sintered product at room temperature such that an average particle diameter (D₅₀) is greater than 5.5 µm and equal to or less than 10.0 µm. In this case, in step (A), the first lithium-containing raw material may be mixed such that a ratio (M:Li) of the total number of moles (M) of transition metals included in the positive electrode active material precursor to the number of moles (Li) of lithium included in the first lithium-containing raw material is in a range of 1:1.00 to 1:1.10. In addition, the primary sintering temperature may be higher than the secondary sintering temperature.

The method of preparing a positive electrode active material according to the present invention may further include a step of (D) mixing the secondary sintered product and a cobalt-containing coating material and performing a heat treatment. In this case, a coating portion containing Co is formed on the secondary sintered product (lithium composite transition metal oxide in the form of a single particle).

According to the present invention, when mixing the secondary sintered product and the cobalt-containing coating material in step (D), an aluminum-containing coating material, a zirconium-containing coating material, or a combination thereof may be further mixed. In this case, the coating portion may further include Al, Zr, or a combination thereof in addition to the Co.

According to the present invention, the cobalt-containing coating material may be mixed in an amount such that a ratio (B/A) of the number of moles (B) of cobalt contained in the cobalt-containing coating material to the total number of moles (A) of metals excluding lithium, which are included in the secondary sintered product, is in a range of 0.01 to 0.03. In this case, there is an advantage in that the lithium by-product may be controlled in a positive electrode active material preparation process that does not include a washing process.

The cobalt-containing coating material may be at least one selected from Co(OH)₂, Co₃O₄, CoO, (CH₃CO₂)₂Co, CoCl₂, and CoSO₄ ·xH₂O, and may specifically be Co(OH)₂.

According to the present invention, the aluminum-containing coating material may be mixed in an amount of 0.03 part by weight to 0.10 part by weight based on 100 parts by weight of the secondary sintered product. In this case, lifetime, resistance, and gas generation amount may be improved by ensuring the structural stability.

The aluminum-containing coating material may be at least one selected from Al(OH)₃, Al₂(SO₄)₃·xH₂O, Al₂O₃, Al(NO₃)₃·9H₂O, AlCl₃, and C₂H₃O₄Al, and may specifically be Al(OH)₃.

The zirconium-containing coating material may be at least one selected from Zr(OH)₄, ZrO₂, Zr(NO₃)₄, ZrCl₄, ZrS₂, Zr(SO₄)₂, and C₈H₁₂O₈Zr.

According to the present invention, the heat treatment may be performed in an oxygen atmosphere to prevent the degradation of the lithium transition metal oxide into the rock salt structure.

According to the present invention, the heat treatment may be performed at a temperature of 600°C to 800°C, specifically 650°C to 780°C, and more specifically 680°C to 720°C, in order to form the coating portion to an appropriate thickness.

According to the present invention, the heat treatment may be performed for 1 hour to 10 hours, specifically 2 hours to 8 hours, and more specifically 3 hours to 6 hours in order to increase a degree of crystallinity of the coating portion.

### Positive Electrode

The present invention provides a positive electrode including the positive electrode active material.

The positive electrode may include a positive electrode collector and a positive electrode active material layer formed on the positive electrode collector, wherein the positive electrode active material layer may include the above positive electrode active material.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary. In this case, the positive electrode active material may be included in an amount of 80 wt% to 99 wt%, more specifically, 85 wt% to 98.5 wt% based on a total weight of the positive electrode active material layer, and excellent capacity characteristics may be obtained within this range.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves adhesion between positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is applied to the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have a viscosity that may provide excellent thickness uniformity during the subsequent coating for the preparation of the positive electrode.

### Lithium Secondary Battery

The present invention provides a lithium secondary battery including the positive electrode; a negative electrode; a separator disposed between the positive electrode and the negative electrode; and an electrolyte.

The lithium secondary battery may further optionally include a battery container accommodating an electrode assembly of the positive electrode, the negative electrode, and the separator, and a sealing member sealing the battery container.

The negative electrode may include a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer may optionally include a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

The binder of the negative electrode active material layer is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent of the negative electrode active material layer is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄ LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode active material according to the present invention has excellent capacity characteristics and life characteristics, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

A composite transition metal hydroxide in a form of a secondary particle that is formed by aggregation of tens to hundreds of primary particles (composition: Ni_{0.885}Co_{0.035}Mn_{0.08}(OH)₂, average particle diameter (D₅₀): 6.2 µm) and LiOH were mixed such that a ratio ((Ni+Co+Mn) :Li) of the total number of moles (Ni+Co+Mn) of transition metals included in the composite transition metal hydroxide to the number of moles (Li) of lithium included in the LiOH was 1:0.98, and Al(OH)₃ (KC DAEJOO), Y₂O₃ (Neo Performance Materials), and ZrO₂ (R&F) were added thereto in amounts of 1,400ppm, 1,000ppm, and 1,500 ppm, respectively, based on a total weight of the composite transition metal hydroxide and mixed to prepare a mixture.

The mixture was subjected to primary sintering at 830°C for 6 hours to obtain a primary sintered product, and the primary sintered product was ground at room temperature such that an average particle diameter (D₅₀) was 5.8 µm.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.04, and were subjected to secondary sintering at 760°C for 9 hours to obtain a secondary sintered product, and the secondary sintered product was ground at room temperature to obtain a lithium composite transition metal oxide (composition: LiNi_{0.87836}Co_{0.03493}Mn_{0.07985}Al_{0.00499}Y_{0.00027}Zr_{0.0016}O₂) in a form of a single particle having an average particle diameter (D₅₀) of 5.8 µm.

After uniformly mixing the lithium composite transition metal oxide in the form of a single particle with Co(OH)₂ (Huayou Cobalt) and Al(OH)₃ (KC DAEJOO), a heat treatment was performed at a temperature of 700°C for 5 hours in an oxygen atmosphere to prepare a positive electrode active material (composition: LiNi_{0.85761}Co_{0.05489}Mn_{0.07978}Al_{0.00586}Y_{0.00027}Zr_{0.00159}O₂) in which a coating portion containing Co and Al was formed on the lithium composite transition metal oxide in the form of a single particle. In this case, the Co(OH)₂ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the Al(OH)₃ was mixed in an amount of 0.05 part by weight based on 100 parts by weight of the lithium composite transition metal oxide in the form of a single particle.

### Example 2

A composite transition metal hydroxide in a form of a secondary particle that is formed by aggregation of tens to hundreds of primary particles (composition: Ni_{0.885}Co_{0.035}Mn_{0.08}(OH)₂, average particle diameter (D₅₀): 6.2 µm) and LiOH were mixed such that a ratio ((Ni+Co+Mn) :Li) of the total number of moles (Ni+Co+Mn) of transition metals included in the composite transition metal hydroxide to the number of moles (Li) of lithium included in the LiOH was 1:0.98, and Al(OH)₃ (KC DAEJOO), Y₂O₃ (Neo Performance Materials), and ZrO₂ (R&F) were added thereto in amounts of 1,400ppm, 2,000ppm, and 1,500 ppm, respectively, based on a total weight of the composite transition metal hydroxide and mixed to prepare a mixture.

The mixture was subjected to primary sintering at 830°C for 6 hours to obtain a primary sintered product, and the primary sintered product was ground at room temperature such that an average particle diameter (D₅₀) was 5.8 µm.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.04, and were subjected to secondary sintering at 760°C for 9 hours to obtain a secondary sintered product, and the secondary sintered product was ground at room temperature to obtain a lithium composite transition metal oxide (composition: LiNi_{0.87813}Co_{0.03492}Mn_{0.07983}Al_{0.00499} Y_{0.00054}Zr_{0.00159}O₂) in a form of a single particle having an average particle diameter (D₅₀) of 5.8 µm.

After uniformly mixing the lithium composite transition metal oxide in the form of a single particle with Co(OH)₂ (Huayou Cobalt) and Al(OH)₃ (KC DAEJOO), a heat treatment was performed at a temperature of 700°C for 5 hours in an oxygen atmosphere to prepare a positive electrode active material (composition: LiNi_{0.85738}Co_{0.05487}Mn_{0.07976}Al_{0.00586}Y_{0.00054}Zr_{0.00159}O₂) in which a coating portion containing Co and Al was formed on the lithium composite transition metal oxide in the form of a single particle. In this case, the Co(OH)₂ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the Al(OH)₃ was mixed in an amount of 0.05 part by weight based on 100 parts by weight of the lithium composite transition metal oxide in the form of a single particle.

### Example 3

A composite transition metal hydroxide in a form of a secondary particle that is formed by aggregation of tens to hundreds of primary particles (composition: Ni_{0.885}Co_{0.035}Mn_{0.08}(OH)₂, average particle diameter (D₅₀): 6.2 µm) and LiOH were mixed such that a ratio ((Ni+Co+Mn) :Li) of the total number of moles (Ni+Co+Mn) of transition metals included in the composite transition metal hydroxide to the number of moles (Li) of lithium included in the LiOH was 1:0.98, and Al(OH)₃ (KC DAEJOO), Y₂O₃ (Neo Performance Materials), and ZrO₂ (R&F) were added thereto in amounts of 2,800ppm, 1,000ppm, and 1,500 ppm, respectively, based on a total weight of the composite transition metal hydroxide and mixed to prepare a mixture.

The mixture was subjected to primary sintering at 830°C for 6 hours to obtain a primary sintered product, and the primary sintered product was ground at room temperature such that an average particle diameter (D₅₀) was 5.8 µm.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.04, and were subjected to secondary sintering at 760°C for 9 hours to obtain a secondary sintered product, and the secondary sintered product was ground at room temperature to obtain a lithium composite transition metal oxide (composition: LiNi_{0.87338}Co_{0.03493}Mn_{0.07985}Al_{0.00998}Y_{0.00027}Zr_{0.00159}O₂) in a form of a single particle having an average particle diameter (D₅₀) of 5.8 µm.

After uniformly mixing the lithium composite transition metal oxide in the form of a single particle with Co(OH)₂ (Huayou Cobalt) and Al(OH)₃ (KC DAEJOO), a heat treatment was performed at a temperature of 700°C for 5 hours in an oxygen atmosphere to prepare a positive electrode active material (composition: LiNi_{0.85262}Co_{0.05489}Mn_{0.07978}Al_{0.01085}Y_{0.00027}Zr_{0.00159}O₂) in which a coating portion containing Co and Al was formed on the lithium composite transition metal oxide in the form of a single particle. In this case, the Co(OH)₂ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the Al(OH)₃ was mixed in an amount of 0.05 part by weight based on 100 parts by weight of the lithium composite transition metal oxide in the form of a single particle.

### Example 4

A composite transition metal hydroxide in a form of a secondary particle that is formed by aggregation of tens to hundreds of primary particles (composition: Ni_{0.885}Co_{0.035}Mn_{0.08}(OH)₂, average particle diameter (D₅₀): 6.2 µm) and LiOH were mixed such that a ratio ((Ni+Co+Mn) :Li) of the total number of moles (Ni+Co+Mn) of transition metals included in the composite transition metal hydroxide to the number of moles (Li) of lithium included in the LiOH was 1:0.98, and Al(OH)₃ (KC DAEJOO), Y₂O₃ (Neo Performance Materials), and ZrO₂ (R&F) were added thereto in amounts of 1,400ppm, 1,000ppm, and 3,500 ppm, respectively, based on a total weight of the composite transition metal hydroxide and mixed to prepare a mixture.

The mixture was subjected to primary sintering at 830°C for 6 hours to obtain a primary sintered product, and the primary sintered product was ground at room temperature such that an average particle diameter (D₅₀) was 5.8 µm.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.04, and were subjected to secondary sintering at 760°C for 9 hours to obtain a secondary sintered product, and the secondary sintered product was ground at room temperature to obtain a lithium composite transition metal oxide (composition: LiNi_{0.87651}Co_{0.03486}Mn_{0.07968}Al_{0.00498}Y_{0.00027}Zr_{0.0037}O₂) in a form of a single particle having an average particle diameter (D₅₀) of 5.8 µm.

After uniformly mixing the lithium composite transition metal oxide in the form of a single particle with Co(OH)₂ (Huayou Cobalt) and Al(OH)₃ (KC DAEJOO), a heat treatment was performed at a temperature of 700°C for 5 hours in an oxygen atmosphere to prepare a positive electrode active material (composition: LiNi_{0.85576}Co_{0.05481}Mn_{0.07961}Al_{0.00585}Y_{0.00027}Zr_{0.0037}O₂) in which a coating portion containing Co and Al was formed on the lithium composite transition metal oxide in the form of a single particle. In this case, the Co(OH)₂ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the Al(OH)₃ was mixed in an amount of 0.05 part by weight based on 100 parts by weight of the lithium composite transition metal oxide in the form of a single particle.

### Example 5

A composite transition metal hydroxide in a form of a secondary particle that is formed by aggregation of tens to hundreds of primary particles (composition: Ni_{0.885}Co_{0.035}Mn_{0.08}(OH)₂, average particle diameter (D₅₀): 6.2 µm) and LiOH were mixed such that a ratio ((Ni+Co+Mn) :Li) of the total number of moles (Ni+Co+Mn) of transition metals included in the composite transition metal hydroxide to the number of moles (Li) of lithium included in the LiOH was 1:0.98, and Al(OH)₃ (KC DAEJOO), Y₂O₃ (Neo Performance Materials), and ZrO₂ (R&F) were added thereto in amounts of 1,400ppm, 1,000ppm, and 1,500 ppm, respectively, based on a total weight of the composite transition metal hydroxide and mixed to prepare a mixture.

The mixture was subjected to primary sintering at 830°C for 6 hours to obtain a primary sintered product, and the primary sintered product was ground at room temperature such that an average particle diameter (D₅₀) was 6.8 µm.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.04, and were subjected to secondary sintering at 760°C for 9 hours to obtain a secondary sintered product, and the secondary sintered product was ground at room temperature to obtain a lithium composite transition metal oxide (composition: LiNi_{0.87836}Co_{0.03493}Mn_{0.07985}Al_{0.00499}Y_{0.00027}Zr_{0.0016}O₂) in a form of a single particle having an average particle diameter (D₅₀) of 6.8 µm.

After uniformly mixing the lithium composite transition metal oxide in the form of a single particle with Co(OH)₂ (Huayou Cobalt) and Al(OH)₃ (KC DAEJOO), a heat treatment was performed at a temperature of 700°C for 5 hours in an oxygen atmosphere to prepare a positive electrode active material (composition: LiNi_{0.85761}Co_{0.05489}Mn_{0.07978}Al_{0.00586}Y_{0.00027}Zr_{0.00159}O₂) in which a coating portion containing Co and Al was formed on the lithium composite transition metal oxide in the form of a single particle. In this case, the Co(OH)₂ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the Al(OH)₃ was mixed in an amount of 0.05 part by weight based on 100 parts by weight of the lithium composite transition metal oxide in the form of a single particle.

### Comparative Example 1

A composite transition metal hydroxide in a form of a secondary particle that is formed by aggregation of tens to hundreds of primary particles (composition: Ni_{0.885}Co_{0.035}Mn_{0.08}(OH)₂, average particle diameter (D₅₀): 6.2 µm) and LiOH were mixed such that a ratio ((Ni+Co+Mn) :Li) of the total number of moles (Ni+Co+Mn) of transition metals included in the composite transition metal hydroxide to the number of moles (Li) of lithium included in the LiOH was 1:0.98, and Al(OH)₃ (KC DAEJOO) and ZrO₂ (R&F) were added thereto in amounts of 1,400ppm and 1,500 ppm, respectively, based on a total weight of the composite transition metal hydroxide and mixed to prepare a mixture.

The mixture was subjected to primary sintering at 830°C for 6 hours to obtain a primary sintered product, and the primary sintered product was ground at room temperature such that an average particle diameter (D₅₀) was 5.8 µm.

The ground primary sintered product and LiOH were mixed such that a ratio ((Ni+Co+Mn) :Li) of the total number of moles (Ni+Co+Mn) of transition metals included in the composite transition metal hydroxide to the number of moles (Li) of lithium included in the LiOH was 1:0.04, and were subjected to secondary sintering at 760°C for 9 hours to obtain a secondary sintered product, and the secondary sintered product was ground at room temperature to obtain a lithium composite transition metal oxide (composition: LiNi_{0.8786}Co_{0.03494}Mn_{0.07987}Al_{0.00499}Zr_{0.0016}O₂) in a form of a single particle having an average particle diameter (D₅₀) of 5.8 µm.

After uniformly mixing the lithium composite transition metal oxide in the form of a single particle with Co(OH)₂ (Huayou Cobalt) and Al(OH)₃ (KC DAEJOO), a heat treatment was performed at a temperature of 700°C for 5 hours in an oxygen atmosphere to prepare a positive electrode active material (composition: LiNi_{0. 85784}Co_{0.0549}Mn_{0.0798}Al_{0.00586}Zr_{0.0016}O₂) in which a coating portion containing Co and Al was formed on the lithium composite transition metal oxide in the form of a single particle. In this case, the Co(OH)₂ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the Al(OH)₃ was mixed in an amount of 0.05 part by weight based on 100 parts by weight of the lithium composite transition metal oxide in the form of a single particle.

### Comparative Example 2

A composite transition metal hydroxide in a form of a secondary particle that is formed by aggregation of tens to hundreds of primary particles (composition: Ni_{0.885}Co_{0.035}Mn_{0.08}(OH)₂, average particle diameter (D₅₀): 6.2 µm) and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.98, and Y₂O₃ (Neo Performance Materials) and ZrO₂ (R&F) were added thereto in amounts of 1,000ppm and 1,500 ppm, respectively, based on a total weight of the composite transition metal hydroxide and mixed to prepare a mixture.

The mixture was subjected to primary sintering at 830°C for 6 hours to obtain a primary sintered product, and the primary sintered product was ground at room temperature such that an average particle diameter (D₅₀) was 5.8 µm.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.04, and were subjected to secondary sintering at 760°C for 9 hours to obtain a secondary sintered product, and the secondary sintered product was ground at room temperature to obtain a lithium composite transition metal oxide (composition: LiNi_{0.88336}Co_{0.03493}Mn_{0.07985}Y_{0.00027}Zr_{0.00159}O₂) in a form of a single particle having an average particle diameter (D₅₀) of 5.8 µm.

After uniformly mixing the lithium composite transition metal oxide in the form of a single particle with Co(OH)₂ (Huayou Cobalt) and Al(OH)₃ (KC DAEJOO), a heat treatment was performed at a temperature of 700°C for 5 hours in an oxygen atmosphere to prepare a positive electrode active material (composition: LiNi_{0.86259}Co_{0.05489}Mn_{0.07978}Al_{0.00088}Y_{0. 00027}Zr_{0. 00159}O₂) in which a coating portion containing Co and Al was formed on the lithium composite transition metal oxide in the form of a single particle. In this case, the Co(OH)₂ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the Al(OH)₃ was mixed in an amount of 0.05 part by weight based on 100 parts by weight of the lithium composite transition metal oxide in the form of a single particle.

### Comparative Example 3

A composite transition metal hydroxide in a form of a secondary particle that is formed by aggregation of tens to hundreds of primary particles (composition: Ni_{0.885}Co_{0.035}Mn_{0.08}(OH)₂, average particle diameter (D₅₀): 6.2 µm) and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.98, and Al(OH)₃ (KC DAEJOO) and Y₂O₃ (Neo Performance Materials) were added thereto in amounts of 1,400ppm and 1,000 ppm, respectively, based on a total weight of the composite transition metal hydroxide and mixed to prepare a mixture.

The mixture was subjected to primary sintering at 830°C for 6 hours to obtain a primary sintered product, and the primary sintered product was ground at room temperature such that an average particle diameter (D₅₀) was 5.8 µm.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.04, and were subjected to secondary sintering at 760°C for 9 hours to obtain a secondary sintered product, and the secondary sintered product was ground at room temperature to obtain a lithium composite transition metal oxide (composition: LiNi_{0.87976}Co_{0.03499}Mn_{0.07998}Al_{0.005}Y_{0.00027}O₂ in a form of a single particle having an average particle diameter (D₅₀) of 5.8 µm.

After uniformly mixing the lithium composite transition metal oxide in the form of a single particle with Co(OH)₂ (Huayou Cobalt) and Al(OH)₃ (KC DAEJOO), a heat treatment was performed at a temperature of 700°C for 5 hours in an oxygen atmosphere to prepare a positive electrode active material (composition: LiNi_{0.85901}Co_{0.05494}Mn_{0.07991}Al_{0.00587}Y_{0.00027}O₂) in which a coating portion containing Co and Al was formed on the lithium composite transition metal oxide in the form of a single particle. In this case, the Co(OH)₂ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the Al(OH)₃ was mixed in an amount of 0.05 part by weight based on 100 parts by weight of the lithium composite transition metal oxide in the form of a single particle.

### Comparative Example 4

A composite transition metal hydroxide in a form of a secondary particle that is formed by aggregation of tens to hundreds of primary particles (composition: Ni_{0.885}Co_{0.035}Mn_{0.08}(OH)₂, average particle diameter (D₅₀): 4.19 µm) and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.98, and Al(OH)₃ (KC DAEJOO), Y₂O₃ (Neo Performance Materials), and ZrO₂ (R&F) were added thereto in amounts of 1,400ppm, 1,000ppm, and 1,500 ppm, respectively, based on a total weight of the composite transition metal hydroxide and mixed to prepare a mixture.

The mixture was subjected to primary sintering at 830°C for 6 hours to obtain a primary sintered product, and the primary sintered product was ground at room temperature such that an average particle diameter (D₅₀) was 3.8 µm.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.04, and were subjected to secondary sintering at 760°C for 9 hours to obtain a secondary sintered product, and the secondary sintered product was ground at room temperature to obtain a lithium composite transition metal oxide (composition: LiNi_{0.87836}Co_{0.03493}Mn_{0.07985}Al_{0.00499}Y_{0.00027}Zr_{0.0016}O₂) in a form of a single particle having an average particle diameter (D₅₀) of 3.8 µm.

After uniformly mixing the lithium composite transition metal oxide in the form of a single particle with Co(OH)₂ (Huayou Cobalt) and Al(OH)₃ (KC DAEJOO), a heat treatment was performed at a temperature of 700°C for 5 hours in an oxygen atmosphere to prepare a positive electrode active material (composition: LiNi_{0.85761}Co_{0.05489}Mn_{0.07978}Al_{0.00586}Y_{0.00027}Zr_{0.00159}O₂ in which a coating portion containing Co and Al was formed on the lithium composite transition metal oxide in the form of a single particle. In this case, the Co(OH)₂ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the Al(OH)₃ was mixed in an amount of 0.05 part by weight based on 100 parts by weight of the lithium composite transition metal oxide in the form of a single particle.

### Comparative Example 5

A composite transition metal hydroxide in a form of a secondary particle that is formed by aggregation of tens to hundreds of primary particles (composition: Ni_{0.885}Co_{0.035}Mn_{0.08}(OH)₂, average particle diameter (D₅₀): 9 µm) and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.98, and Al(OH)₃ (KC DAEJOO), Y₂O₃ (Neo Performance Materials), and ZrO₂ (R&F) were added thereto in amounts of 1,400ppm, 1,000ppm, and 1,500 ppm, respectively, based on a total weight of the composite transition metal hydroxide and mixed to prepare a mixture.

The mixture was subjected to primary sintering at 830°C for 6 hours to obtain a primary sintered product, and the primary sintered product was ground at room temperature such that an average particle diameter (D₅₀) was 11 µm.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.04, and were subjected to secondary sintering at 760°C for 9 hours to obtain a secondary sintered product, and the secondary sintered product was ground at room temperature to obtain a lithium composite transition metal oxide (composition: LiNi_{0.87836}Co_{0.03493}Mn_{0.07985}Al_{0.00499}Y_{0.00027}Zr_{0.0016}O₂) in a form of a single particle having an average particle diameter (D₅₀) of 11 µm.

After uniformly mixing the lithium composite transition metal oxide in the form of a single particle with Co(OH)₂ (Huayou Cobalt) and Al(OH)₃ (KC DAEJOO), a heat treatment was performed at a temperature of 700°C for 5 hours in an oxygen atmosphere to prepare a positive electrode active material (composition: LiNi_{0.85761}Co_{0.05489}Mn_{0.07978}Al_{0.00586}Y_{0.00027}Zr_{0.00159}O₂) in which a coating portion containing Co and Al was formed on the lithium composite transition metal oxide in the form of a single particle. In this case, the Co(OH)₂ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the Al(OH)₃ was mixed in an amount of 0.05 part by weight based on 100 parts by weight of the lithium composite transition metal oxide in the form of a single particle.

### Experimental Examples

### Experimental Example 1: Positive Electrode Active Material Analysis

In order to confirm how dopants, Al, Y, and Zr, were present in the positive electrode active material prepared in Example 1 and how the coating portion containing Co and Al was formed, analysis was performed using TEM (Transmission Electron Microscope) (Titan Buved G2 600-300) energy dispersive X-ray spectroscopy (EDX)-Mapping, TEM EDX-Mapping data are illustrated in FIG. 1.

Referring to FIG. 1, with respect to the positive electrode active material prepared in Example 1, it may be confirmed that the dopants, Al, Y, and Zr, did not have a concentration gradient within the particle and were uniformly distributed, and it may be confirmed that the coating portion containing Co and Al was formed in a form of a thin film on a surface of the particle.

### Experimental Example 2: Confirmation of Amount of Residual Lithium Present in the Secondary Sintered Product

An amount of residual lithium, that is, amounts of Li₂CO₃ and LiOH, present in each of the secondary sintered products prepared in Examples 1 to 5 and Comparative Examples 1 to 5 was confirmed by the following method.

Specifically, 5 g of each of the secondary sintered products prepared in Examples 1 to 5 and Comparative Examples 1 to 5 was added to 100 g of distilled water, mixed for 5 minutes, and then filtered. After the filtering, the amounts of Li₂CO₃ and LiOH, which had been dissolved in the distilled water, were measured by titration (using 0.1N HCl) using a pH meter, and the results thereof are presented in Table 1.

**[Table 1]**

| | Li₂CO₃ (wt%) | LiOH (wt%) | Total (wt%) |
|---|---|---|---|
| Example 1 | 0.169 | 0.096 | 0.265 |
| Example 2 | 0.161 | 0.093 | 0.254 |
| Example 3 | 0.179 | 0.097 | 0.276 |
| Example 4 | 0.163 | 0.102 | 0.265 |
| Example 5 | 0.172 | 0.114 | 0.286 |
| Comparative Example 1 | 0.316 | 0.115 | 0.431 |
| Comparative Example 2 | 0.308 | 0.112 | 0.420 |
| Comparative Example 3 | 0.236 | 0.118 | 0.354 |
| Comparative Example 4 | 0.194 | 0.118 | 0.312 |
| Comparative Example 5 | 0.255 | 0.101 | 0.356 |

### Experimental Example 3: Capacity Retention Evaluation

Each of the positive electrode active materials prepared in Examples 1 to 5 and Comparative Examples 1 to 5, a carbon black conductive agent, and a polyvinylidene fluoride (PVDF) binder were mixed in an N-methylpyrrolidone (NMP) solvent at a ratio of 96:2:2 to prepare a positive electrode slurry. One surface of an aluminum current collector was coated with the positive electrode slurry, dried at 150°C, and then roll-pressed to prepare a positive electrode.

A lithium metal electrode was used as a negative electrode, an electrode assembly was prepared by disposing a porous polyethylene separator between the positive electrode and the negative electrode, the electrode assembly was disposed in a battery case, and an electrolyte solution was then injected into the case to prepare each half-cell. In this case, the electrolyte solution was prepared by dissolving 1.0 M LiPF₆ in an organic solvent in which ethylene carbonate (EC) :ethyl methyl carbonate (EMC) :diethyl carbonate(DEC) were mixed in a volume ratio of 3:4:3.

For each half-cell thus prepared, capacity of the lithium secondary battery was measured by repeating charge and discharge cycles 50 times at a constant current of 0.33 C in a range of 3.0 V to 4.25 V at 45°C, and a percentage of 50^{th} cycle discharge capacity relative to 1^{st} cycle discharge capacity was defined as a capacity retention and the capacity retention is presented in Table 2 below.

**[Table 2]**

| | Capacity retention (%) |
|---|---|
| Example 1 | 95.3 |
| Example 2 | 94.9 |
| Example 3 | 95.0 |
| Example 4 | 95.5 |
| Example 5 | 95.4 |
| Comparative Example 1 | 93.5 |
| Comparative Example 2 | 93.4 |
| Comparative Example 3 | 93.6 |
| Comparative Example 4 | 92.9 |
| Comparative Example 5 | 94.7 |

### Experimental Example 4: Thermal Stability Evaluation

After each of half-cells of Example 1 and Comparative Example 4, which had been prepared as in Experimental Example 3, was charged (end current: 0.05 C) at a constant current of 0.2 C to 4.25 V in a constant current/constant voltage (CC/CV) mode at 25°C, the battery was disassembled in a charged state to wash the positive electrode with DMC, heat flow was measured while increasing the temperature at 10°C/min using a differential scanning calorimeter (DSC), and resulting total calorific value, onset (peak start) temperature, main peak temperature, and instantaneous maximum calorific value are presented in Table 3 below.

**[Table 3]**

| | Total calorific value (mJ) | Onset temperature (°C) | Main peak temperature (°C) | Instantaneous maximum calorific value (W/g) |
|---|---|---|---|---|
| Example 1 | 2878.33 | 198.50 | 208.1 | 3.415 |
| Comparative Example 4 | 2199.82 | 207.64 | 216.2 | 3.448 |

Referring to Table 1, with respect to the positive electrode active materials of Examples 1 to 5, it may be confirmed that the amount of residual lithium, that is, the total amount of Li₂CO₃ and LiOH, was reduced.

Referring to Table 2 and Table 3, it may be confirmed that the batteries respectively including the positive electrode active materials of Examples 1 to 5 had excellent life characteristics due to high capacity retention, and it may be confirmed that the battery including the positive electrode active material of Example 1 had excellent thermal stability.

In contrast, since the positive electrode active material of Comparative Example 1 did not include Y, it had a problem with grain growth, and thus, it may be confirmed that capacity retention of the battery including the same was reduced. In addition, since the positive electrode active material of Comparative Example 2 did not include Al, it was in a form in which cation mixing was increased due to high defects, and thus, it may be confirmed that capacity retention of the battery including the same was reduced. Also, since the positive electrode active material of Comparative Example 3 did not include Zr that maintains structural stability, it may be confirmed that capacity retention was reduced. In addition, since the positive electrode active material of Comparative Example 4 had a small average particle diameter, it may be confirmed that capacity retention of the battery was low and thermal stability was also poor. Furthermore, since the positive electrode active material of Comparative Example 5 had a large average particle diameter, a movement distance of lithium in the particle was increased, and thus, it may be confirmed that capacity retention of the battery was reduced, and, in addition, although not shown in Table 2, it was confirmed that resistance characteristics of the positive electrode active material of Comparative Example 5 were not good (initial resistance and resistance increase rate were high).

## Claims

1. A positive electrode active material comprising a lithium composite transition metal oxide in a form of a single particle having an average particle diameter (D₅₀) of greater than 5.5 µm and equal to or less than 10.0 µm,
wherein the lithium composite transition metal oxide comprises aluminum (Al), yttrium (Y), and zirconium (Zr).

2. The positive electrode active material of claim 1, wherein the Al is included in an amount of 500 ppm to 3,000 ppm based on a total weight of the lithium composite transition metal oxide.

3. The positive electrode active material of claim 1, wherein the Y is included in an amount of 100 ppm to 2,000 ppm based on a total weight of the lithium composite transition metal oxide.

4. The positive electrode active material of claim 1, wherein the Zr is included in an amount of 500 ppm to 5,000 ppm based on a total weight of the lithium composite transition metal oxide.

5. The positive electrode active material of claim 1, wherein the lithium composite transition metal oxide comprises 60 mol% or more of nickel based on the total number of moles of metals excluding lithium.

6. The positive electrode active material of claim 1, wherein the lithium composite transition metal oxide has a composition represented by Formula 1:
[Formula 1] Liₓ[NiₐCo_{b}Mn_{c}Al_{d}YₑZr_{f}M1_{g}]O_{2-y}A_{y}
wherein, in Formula 1,
M1 is at least one selected from boron (B), titanium (Ti), tungsten (W), niobium (Nb), strontium (Sr), molybdenum (Mo), magnesium (Mg), phosphorus (P), vanadium (V), tantalum (Ta), gallium (Ga), and calcium (Ca),
A is at least one selected from fluorine (F), chlorine (Cl), bromine (Br), iodine (I), and sulfur (S), and
0.9≤x≤1.2, 0.6≤a<1.0, 0≤b≤0.4, 0≤c≤0.4, 0<d≤0.01, 0<e≤0.0006, 0<f≤0.005, 0≤g≤0.2, a+b+c+d+e+f+g=1, and 0≤y≤0.2.

7. The positive electrode active material of claim 1, further comprising a coating portion containing cobalt (Co) which is formed on the lithium composite transition metal oxide in the form of a single particle.

8. The positive electrode active material of claim 7, wherein the coating portion further comprises Al, Zr, or a combination thereof.

9. A method of preparing the positive electrode active material of claim 1, the method comprising steps of:
(A) preparing a mixture by mixing a positive electrode active material precursor, which is a composite transition metal hydroxide, a composite transition metal oxyhydroxide, or a combination thereof, a first lithium-containing raw material, an aluminum-containing raw material, a yttrium-containing raw material, and a zirconium-containing raw material;
(B) preparing a primary sintered product by performing primary sintering on the mixture at a temperature of 820°C to 950°C; and
(C) preparing a secondary sintered product by optionally mixing a second lithium-containing raw material with the primary sintered product and performing secondary sintering at a temperature of 700°C to 850°C.

10. The method of claim 9, further comprising a step of (B') grinding the primary sintered product, before step (C).

11. The method of claim 9, further comprising a step of (C') grinding the secondary sintered product.

12. The method of claim 9, further comprising a step of (D) mixing the secondary sintered product and a cobalt-containing coating material and performing a heat treatment.

13. The method of claim 12, wherein, when mixing the secondary sintered product and the cobalt-containing coating material in step (D), an aluminum-containing coating material, a zirconium-containing coating material, or a combination thereof is further mixed.

14. The method of claim 12, wherein the cobalt-containing coating material is mixed in an amount such that a ratio (B/A) of the number of moles (B) of cobalt contained in the cobalt-containing coating material to the total number of moles (A) of metals excluding lithium, which are included in the secondary sintered product, is in a range of 0.01 to 0.03.

15. The method of claim 13, wherein the aluminum-containing coating material is mixed in an amount of 0.03 part by weight to 0.10 part by weight based on 100 parts by weight of the secondary sintered product.

16. The method of claim 12, wherein the heat treatment is performed in an oxygen atmosphere.

17. The method of claim 12, wherein the heat treatment is performed at a temperature of 600°C to 800°C.

18. A positive electrode comprising the positive electrode active material of any one of claims 1 to 8.

19. A lithium secondary battery comprising:
the positive electrode of claim 18;
a negative electrode;
a separator disposed between the positive electrode and the negative electrode; and
an electrolyte.
